(19) Europäisches Patentamt
European Patent Office
Office européen des brevets

(11) Veröffentlichungsnummer: **0 206 099**
**B1**

# (12) EUROPÄISCHE PATENTSCHRIFT

(45) Veröffentlichungstag der Patentschrift: **28.02.90**

(51) Int. Cl. ⁵: **C 08 G 65/40**

(21) Anmeldenummer: **86107906.9**

(22) Anmeldetag: **10.06.86**

## (54) Phosphorhaltige Polyarylenäther und Verfahren zu ihrer Herstellung.

(30) Priorität: **13.06.85 DE 3521123**

(43) Veröffentlichungstag der Anmeldung:
**30.12.86 Patentblatt 86/52**

(45) Bekanntmachung des Hinweises auf die Patenterteilung:
**28.02.90 Patentblatt 90/09**

(84) Bennante Vertragsstaaten:
**DE FR GB IT NL**

(56) Entgegenhaltungen:
**EP-A-0 085 377**
**EP-A-0 143 407**
**DE-A-2 305 413**
**US-A-3 784 504**

**Kunststoff-Kompendium, Franck/Biederlich, S. 49,51 (1984)**

**Encycl. Sc. and Technol. 2, 478 (1985)**

**Die Akte enthält technische Angaben, die nach dem Eingang der Anmeldung eingereicht wurden und die nicht in dieser Patentschrift enthalten sind.**

(73) Patentinhaber: **Röhm GmbH**
**Kirschenallee Postfach 4242**
**D-6100 Darmstadt 1 (DE)**

(72) Erfinder: **Ude, Werner, Dr.**
**Birngartenweg 115**
**D-6100 Darmstadt (DE)**
Erfinder: **Knebel, Joachim, Dr.**
**Dieselstrasse 20**
**D-6100 Darmstadt (DE)**

EP 0 206 099 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die Erfindung betrifft phosphorhaltige Polyarylenäther, die hochtemperaturbeständige und schwer brennbare Massen mit Kunststoffeigenschaften darstellen, sowie ein Verfahren zu ihrer Herstellung.

Aus der DE-A-3 203 186 sind lineare phosphorhaltige Polyarylenäther bekannt, die sich gegenüber den von S. Hashimoto et al., Journal of Makromol. Sci.Chem., A 11 (12), Seiten 2167 - 2176 (1977) beschriebenen phosphorhaltigen aromatischen Polyäthern dadurch unterscheiden, daß sie eine höhere reduzierte Viskosität, d.h. ein höheres Molekulargewicht haben und Massen von erheblicher Festigkeit und typischen Kunststoffeigenschaften mit guten Selbstlöscheigenschaften darstellen. Ihre reduzierte Viskosität liegt bei wenigstens 0,25 dl/g.

Die Herstellung der phosphorhaltigen Polyarylenäther erfolgt durch Polykondensation, z. B. von aromatischen Bisfluoriden mit Bisphenolen, von denen mindestens eine Komponente eine Phosphin- bzw. Phosphinoxidteilstruktur aufweist. Ein Nachteil bei der Herstellung solcher Kunststoffeigenschaften aufweisender Substanzen ist, daß zu ihrer Bildung grundsätzlich sehr reine bifunktionelle Ausgangsstoffe eingesetzt werden müssen, um lineare Makromoleküle zu erzeugen. Darüber hinaus werden entweder beim Einsatz billigerer, aber weniger reaktiver Ausgangsverbindungen sehr lange Reaktionszeiten, die in einem Bereich von 10 bis 80 Stunden liegen, benötigt oder es müssen teure, höher reaktive Ausgangsverbindungen eingesetzt werden, um kürzere Reaktionszeiten zu erreichen.

Es ist daher die Aufgabe der Erfindung, phosphorhaltige Polyarylenäther zu finden, die hochtemperaturbeständig sowie schwerbrennbar sind, die echte Kunststoffeigenschaften haben, aber in relativ kurzen Reaktionszeiten auch aus billigeren, gegebenenfalls weniger reinen Ausgangsstoffen herstellbar sind.

Die Aufgabe wird durch die phosphorhaltigen Polyarylenäther gemäß Anspruch 1 gelöst. Sie unterscheiden sich von den in der DE-A-3 203 186 beschriebenen Verbindungen durch verzweigte Molekularstruktur. Überraschenderweise stellen sie Massen dar, die nicht vernetzt sind und die bekannt guten Eigenschaften der vorbeschriebenen Polyarylenäther besitzen.

Die Erfindung betrifft danach phosphorhaltige Polyarylenäther mit wiederkehrenden Einheiten der Struktur A und gegebenenfalls B

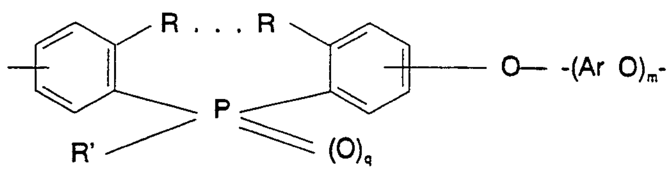

A B

worin

R jeweils ein Wasserstoffatom oder R...R zusammengenommen eine der unter R" genannten Gruppen,
R' eine Alkyl-, Chlormethyl-, Aryl-Gruppe
Ar eine Phenylen- oder Naphthylengruppe oder eine Gruppe

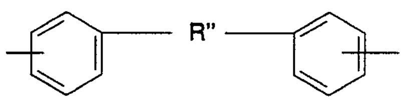

R" eine kovalente Einfachbindung, ein Sauerstoffatom, ein Schwefelatom, eine Sulfonyl-, Carbonyl-, Methylen- oder Isopropyliden-Brückengruppe oder einen 5 bis 15 C-Atome enthaltenden organischen Rest, dessen freie Valenzen von quartären C-Atomen ausgehen, oder die oben genannte Formel Phenolphthalein darstellt,
q = 0 oder 1
m einen Mittelwert im Bereich von 1 bis 10 bedeuten,

dadurch gekennzeichnet, daß der phosphorhaltige Polyarylenäther verzweigt ist und als Verzweigungsstellen mit den Einheiten A und gegebenenfalls B statistisch wechselnde Einheiten der Strukturen C und/oder D in Mengen von 0,2 bis 20 Mol.-%, bezogen auf die Molsumme der Einheiten A, B, C und D

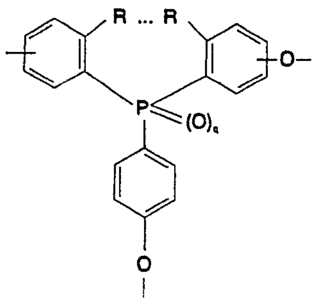

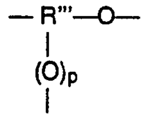

C D

enthält, wobei R und q die oben angegebenen Bedeutungen haben, R''' ein wenigstens dreiwertiger aliphatischer oder aromatischer Rest und p eine ganze Zahl von 1 bis 4 ist.

Weiter betrifft die Erfindung ein Verfahren zur Herstellung der erfindungsgemäßen phosphorhaltigen Polyarylenäther durch Polykondensation eines bifunktionellen Phosphins bzw. Phosphinoxids A', gegebenenfalls zusammen mit einer bifunktionellen aromatischen Verbindung B' in Gegenwart einer zu den Gruppen X mindestens halb äquivalenten Menge Alkali bei einer Reaktionstemperatur von 100 – 300 Grad C

A' B'

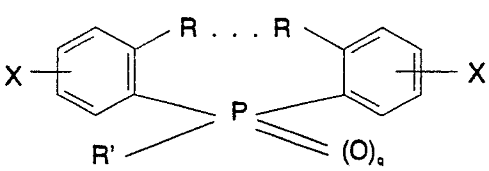

$X\text{-}(Ar\text{-}O)_{m-1}\text{-}Ar\text{-}X$

wobei R, R', Ar, q und m die in Anspruch 1 angegebene Bedeutung haben und die Gruppen X zur Hälfte aus Halogenatomen und zur anderen Hälfte aus Hydroxylgruppen bestehen, dadurch gekennzeichnet, daß die Polykondensation in Gegenwart von Verbindungen der Formeln C' und/oder D' und in einer Menge von 0,2 bis 20 Mol.-%, bezogen auf die Molsumme der Verbindungen A', B', C' und D' durchgeführt wird.

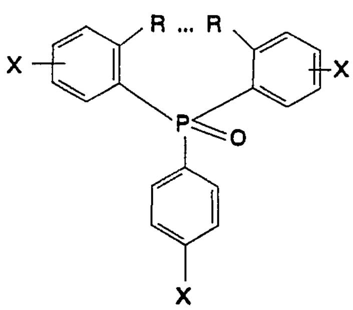

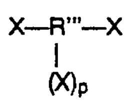

C' D' p = 1 bis 4)

Durch den Einbau von Verbindungen mit mehr als 2 zur Polykondensation fähigen funktionellen Gruppen im Mengen von 0,2 bis 20 Mol.-%, werden die bisher für die Bildung von phosphorhaltigen Polyarylenäthern mit den geforderten Eigenschaften notwendigen Reaktionszeiten drastisch, d.h. bis auf etwa ein zwanzigstel der bisher notwendigen Reaktionszeiten gesenkt. Diese technisch sehr bedeutsame Reaktionsbeschleunigung, deren Ursachen nicht geklärt sind und die möglicherweise mit der Verzweigung bei der Polykondensationsreaktion zusammenhängt, läßt auch den Einsatz von weniger reaktiven, gegebenenfalls unreinen Ausgangsverdüngen bei der Herstellung der phosphorhaltigen Polyarylenäther zu. So kann z. B. die teure Verbindung 4,4'-Difluortriphenylphosphinoxid als eines der Hauptmonomeren bei der Herstellung der erfindungsgemäßen Polyarylenäther gegen das billigere analoge Dichlorderivat ausgetauscht werden. Auch ist dann das bei der Polykondensation als Beiprodukt anfallende Natriumchlorid leichter zu entsorgen als das Beiprodukt Natriumfluorid.

Die neuen phosphorhaltigen Polyarylenäther entstehen bei der Kondensation eines Gemisches von zwei- und mehrfunktionellen Ausgangsverbindungen. Überraschenderweise entstehen trotzdem keine merklichen Mengen von vernetzten Polymeren, wenn der Anteil der höherfunktionellen Ausgangsstoffe richtig begrenzt wird. Die Polymeren sind löslich und schmelzbar, was bei durchgehender Vernetzung nicht der Fall wäre, und sind daher als wenigstens zum Teil verzweigt anzusehen. Es gibt jedoch Hinweise, daß die höherfunktionellen Ausgangsverbindungen nur zum Teil mit mehr als zwei Funktionen an der Polykondensation teilnehmen, so daß der Anteil der daraus gebildeten Einheiten nicht dem tatsächlichen Verzweigungsgrad entspricht. Wegen der tatsächlich vorhandenen höheren Funktionalität wird hier vereinfachend von "Verzweigungsmonomeren" bzw. "Verzweigungseinheiten" gesprochen.

Der Anteil der Verzweigungseinheiten wird empirisch so hoch festgelegt, daß die erwünschte Beschleunigung der Polykondensation zu Polymeren mit Kunststoffeigenschaften auftritt, aber Löslichkeit und Schmelzbarkeit erhalten bleiben. Wenn der Gehalt an Verzweigungseinheiten zu gering ist, entstehen kunststoffartige Polykondensate erst nach sehr langen Reaktionszeiten. Wenn er zu hoch wird, entstehen schließlich unlösliche und unschmelzbare Polykondensate. Der Gefahr der Vernetzung kann man durch den Zusatz monofunktioneller Ausgangsstoffe E – X entgegenwirken, wobei X die zur Kondensation befähigte reaktive Gruppe und E ein monofunktioneller Rest, insbesondere Kohlenwasserstoffrest. z. B. ein Alkyl- oder Arylrest oder eine Triphenylphosphinoxidgruppe ist. Diese monofunktionellen Reste bilden Endgruppen an den Haupt- und Seitenketten und verhindern deren Kondensation, die zur Vernetzung führen würde. *)

Umgekehrt gestattet es der Einsatz tri- oder mehrfunktioneller Ausgangsverbindungen, bifunktionelle Ausgangsstoffe zu verarbeiten, die geringe Anteile monofunktioneller Verbindungen als herstellungsbedingte Verunreinigung enthalten. Diese monofunktionellen Verunreinigungen würden in Abwesenheit der höherfunktionellen Ausgangsstoffe kettenabbrechend wirken und das Molekulargewicht auf unerwünscht niedrige Werte begrenzen.

In den bevorzugten Polyarylenäthern der Erfindung sind in den linearen Molekülabschnitten Einheiten A und B alternierend angeordnet. Daraus ergeben sich für die verzweigten Polymermoleküle folgende bevorzugte schematische Strukturen:

```
E – (A – B)n – C – (A – B)n – C – (A – B)n – E
               |              |
               X              (A – B)n – E
```

und

```
E – (B – A)n – D – (B – A)n – D – (B – A)n – E
               |              |
               (X)p           [ (B – A)n – E ]p
```

worin die Indices n gleiche oder verschiedene ganzzahlige Werte bedeuten. Die schematischen Strukturen weichen insofern von den tatsächlichen Molekularstrukturen ab, als die Hauptkette mehr als zwei Verzweigungseinheiten C bzw. D enthalten können und die Seitenketten ihrerseits wieder ein- oder mehrmals verzweigt sein können. Weiterhin ergeben sich beim Einsatz von 4- oder mehrfunktionellen Monomeren D' zusätzliche Varianten bei nur teilweiser Umsetzung ihrer reaktiven Gruppen X. Auch die Möglichkeit der Anwesenheit beider Verzweigungstypen C und D im gleichen Polymermolekül ist hier nicht dargestellt worden. Der bevorzugte Anteil der verzweigenden Einheiten C bzw. D beträgt 0,5 bis 10 Mol-%, bezogen auf die Molsumme der durch Äthersauerstoffatome getrennten Einheiten. Der Anteil der Endgruppeneinheiten E kann in der gleichen Größenordnung liegen. Die reduzierte Viskosität der phosphorhaltigen Polyarylenäther ist vorzugsweise $\eta_{sp}/c \geq 0{,}25$ dl/g.

Es wurde gefunden, daß durch Polykondensation von bifunktionellen Verbindungen der Struktur A' allein oder mit bifunktionellen Verbindungen der Struktur B' in Gegenwart der höher als bifunktionellen Verbindungen C' bzw. D' verzweigte, unvernetzte phosphorhaltige Polyarylenäther mit den erforderlichen Kunststoffeigenschaften in überraschend kurzer Reaktionszeit gebildet werden.

Die für die Herstellung der neuen Polyarylenäther anzuwendenden Polykondensationsbedingungen sind denen für die Herstellung von phosphorhaltigen Polyarylenäthern nach DE-A-3 203 186 bzw. nach US-A-4 492 805 analog. Dies betrifft insbesondere die Verwendung geeigneter Lösungsmittel, wie z. B. Chlorbenzol oder N-Methylpyrrolidon, die Reaktionstemperaturen von 100 bis 300°C und die Kondensationsmittel, für die starkbasische Alkaliverbindungen, insbesondere Natrium- oder Kaliumcarbonat, in einer zur abzuspaltenden Halogenidmenge äquivalenten Menge eingesetzt werden.

Die Verbindungen A', B', C' und D' werden in einem solchen Verhältnis zueinander eingesetzt, daß die miteinander reagierenden Halogen-, insbesondere F- und/oder Cl- und OH-Gruppen äquivalent sind, gegebenenfalls mit der Voraussetzung, daß die höher als bifunktionellen Verbindungen C' bzw. D' als Verbindungen mit nur zwei reaktiven Gruppen betrachtet werden. Zur Herstellung der Polymeren werden unter den genannten Bedingungen Reaktionszeiten von 30 Minuten bis mehrere Stunden benötigt.

Unter den phosphorhaltigen *Ausgangskomponenten der Struktur A'* sind Derivate des Methyl-diphenylphosphins und insbesondere des Triphenylphosphins und hier im allgemeinen solche des Triphenylphosphinoxids bevorzugt. Die Gruppen X, insbesondere die F- und/oder Cl-Atome, stehen vorzugsweise in p-Stellung zu dem an das Phosphoratom gebundenen C-Atom. Die bevorzugten Vertreter der Verbindung A' sind 4,4'-Dichlortriphenylphosphinoxid, 4,4'-Dichlordiphenylmethylphosphinoxid, 4,4'-Difluortriphenylphosphinoxid und 4,4'-Difluordiphenylmethylphosphinoxid.

Typische Beispiele für die bifunktionellen aromatischen Verbindungen B' haben die folgenden Strukturen (1) bis (8):

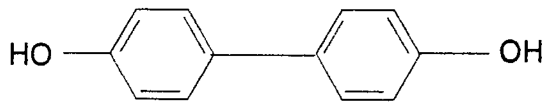

4,4'-Dihydroxydiphenyl
(1)

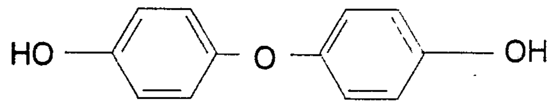

4,4'-Dihydroxydiphenyläther
(2)

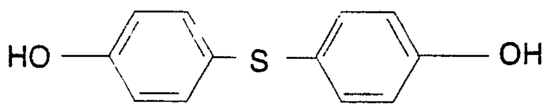

4,4'-Dihydroxydiphenylsulfid
(3)

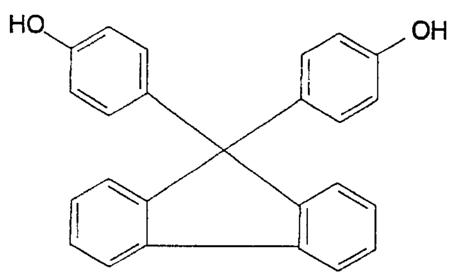

9,9'-Bis-(4-hydroxyphenyl)fluoren
(4)

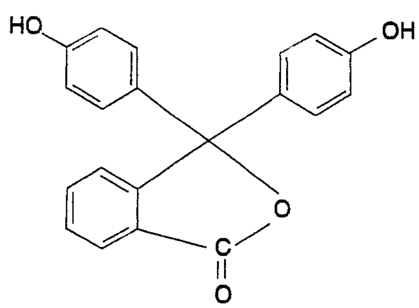

Phenolphthalein
(5)

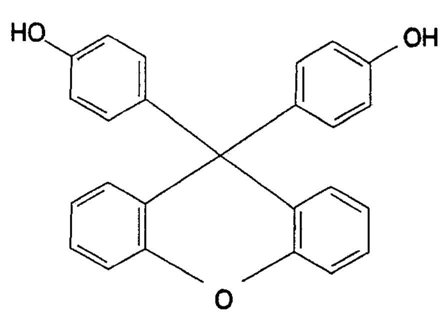

9,9-Bis-(4-hydroxyphenyl)xanthen
(6)

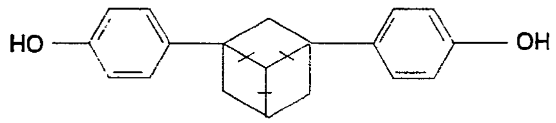

4,4'-Dihydroxyphenyl-adamantan
(7)

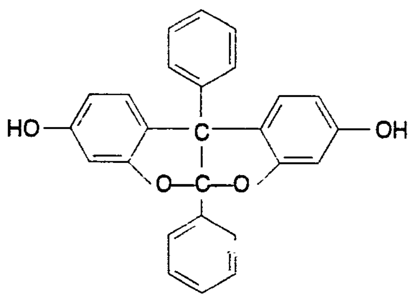

(8)

Die Erfindung schließt somit auch solche Gruppen R" ein, die mit den an die freien Valenzen gebundenen Phenylgruppen mehrfach verbrückt sind.

Die bifunktionelle *aromatische Verbindung B'*, dargestellt durch die Formel $X - (Ar - O)_{m-1} - Ar\text{–}X$ wird vorzugsweise mit X = OH eingesetzt. Die Funktionen X im Molekül können wahlweise aber auch Halogen, insbesondere Fluor oder Chlor sein. Beispiele bevorzugter Vertreter der Verbindungen B' sind Hydrochinon, Resorcin, 1,4-Dihydroxynaphthalin, 4,4'-Dihydroxydiphenyl, die als Bisphenol A und F bekannten Verbindungen, 4,4'-Difluor und 4,4'-Dichlorbenzophenon und besonders bevorzugt 4,4'-Dihydroxydiphenyläther. Polyarylenäther, deren lineare Molekülabschnitte nur aus Einheiten der Struktur A aufgebaut sind, entstehen beispielsweise durch Polykondensation von Monomeren A', bei denen eine Gruppe X ein Halogenatom und die andere eine Hydroxylgruppe ist. Ebenso können zwei verschiedene Monomere A' eingesetzt werden, von denen für eines X = Halogen und das andere X = OH gilt.

Vorzugsweise werden Gemische von Monomeren A' und B' eingesetzt, wobei die reaktiven Gruppen X des einen Monomeren, vorzugsweise A', Halogenatome, und die des anderen, vorzugsweise B', Hydroxylgruppen sind.

Als Verzweigungsmonomere C' und D' kommen beispielsweise die folgenden Verbindungen (1) als C' und (2) bis (5) als D' in Betracht:

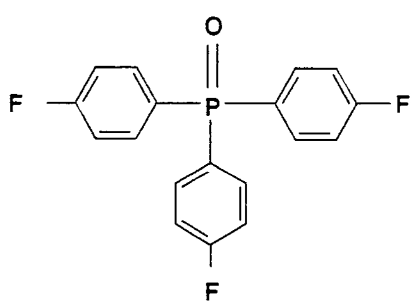

Tris(4-fluorphenyl)phosphinoxid
(1)

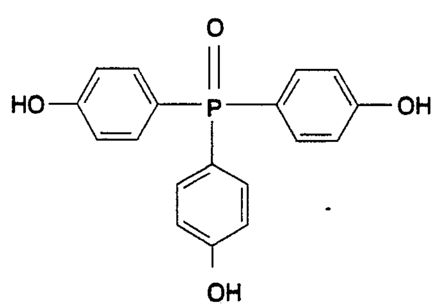

Tris(4-hydroxyphenyl)phosphinoxid
(2)

Beispiele für Verzweigungsmonomere D' sind:

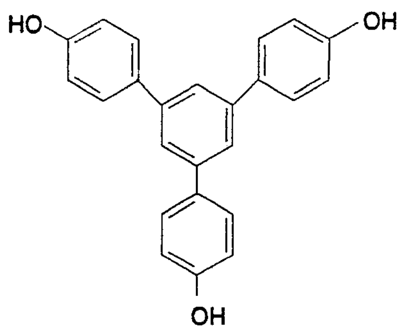

1,3,5-Tris(4'-hydroxyphenyl)benzol
(3)

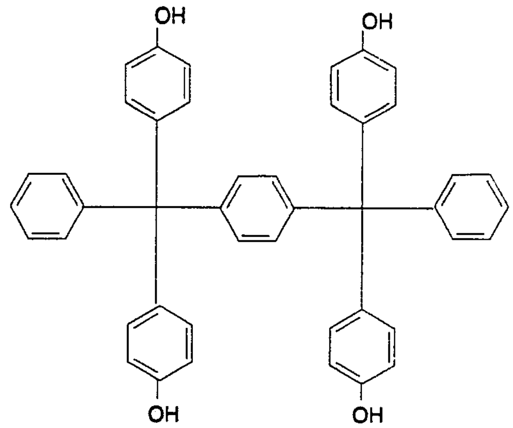

1,4-Bis(4',4"-dihydroxytriphenylmethyl)benzol
(4)

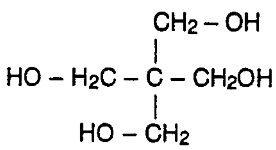

Pentaerythrit
(5)

Die Endgruppen können nicht umgesetzte Halogenatome, wie F oder Cl, oder Hydroxylgruppen sein. Vorteilhaft veräthert man zur Verbesserung der Polymerstabilität die Hydroxylgruppen mit Alkylierungs- oder Arylierungsmitteln, wie z. B. Methylchlorid, oder man acyliert die Hydroxylgruppen z. B. mit Acetanhydrid.

Besonders wirtschaftlich ist die Polykondensation eines technischen Gemisches von Halogen-triphenylphosphinoxyden, das neben Dihalogen-triphenylphosphinoxyd als Hauptbestandteil geringere Mengen an Mono- und Trihalogen-triphenylphosphinoxyd enthält, mit einem aromatischen Bisphenol, insbesondere Dihydroxydiphenyläther. Das genannte technische Gemisch enthält Monomere der Typen A', C' und E–X.

Die Erfindung wird durch die nachfolgenden Beispiele näher erläutert.

*) Wenn solche monofunktionellen Gruppen anwesend sind, machen sie gewöhnlich 0,1 bis 15 Prozent der Molzahl aus, mit der die Bishalogen- bzw. Bisphenolverbindungen an der Reaktion beteiligt sind. Dabei sei die Summe aller funktionellen OH- und Halogengruppen in der linearen Kette als 200 % angenommen, wovon maximal 15 % Molekülen mit mehr als 2 Halogen und/oder Hydroxyfunktionen angehören.

**Beispiel 1**

In einem 250 ml-Vierhalskolben mit Rührer, Tropftrichter, Innenthermometer und Liebig-Kühler, der später durch einen Rückflußkühler ersetzt werden kann, werden 0,05 mol Bis(chlorphenyl)phenylphosphinoxid (über Friedel-Crafts-Reaktion synthetisiert, ca. 95 % p-Isomeres), 0,053 mol Kaliumcarbonat, 0,0498 mol 4,4'-Dihydroxydiphenyläther, 75 ml N-Methylpyrrolidon, 46 ml Chlorbenzol und 0,0002 Mol 1,4-Bis(4',4"-dihydroxytriphenylmethyl)benzol zusammengegeben. Man erhitzte auf Siedetemperatur und destillierte ein Wasser/Chlorbenzol-Gemisch ab. Nachdem praktisch nichts mehr überging, wurden bei Siedetemperatur weitere 46 ml Chlorbenzol langsam zugetropft und weiter Wasser/Chlorbenzol abdestilliert. Man erhöhte anschließend die Temperatur des Reaktionsgemisches auf 180°C und rührte das Gemisch 20 Stunden bei dieser Temperatur. Man leitete nun 15 Minuten lang Chlormethan in die Reaktionsmischung. Anschließend wurde abgekühlt, die Mischung mit 20 ml N-Methylpyrrolidon verdünnt und über eine Nutsche filtriert.

Danach wurde die Reaktionsmischung in 1,8 l Wasser/Methanol (v : v = 7 : 3) eingetropft, die erhaltene Polymerisatfällung abfiltriert, mit 100 ml Methanol gewaschen, 18 Stunden bei Raumtemperatur getrocknet, in Methylenchlorid gelöst und erneut in Methanol ausgefällt. Das abfiltrierte, flockige Produkt (18,2 g) wurde mit etwas Methanol gewaschen und bei 80°C im Vakuum bis zur Gewichtskonstanz getrocknet. Aus Chloroform erhält man eine gelbe, flexible, sehr stabile Gießfolie.

Führte man den gleichen Versuch ohne Verwendung des 1,4-Bis(4',4"-dihydroxytriphenylmethyl)benzols, jedoch unter Einsatz von genau 0,05 mol 4,4'-Dihydroxydiphenyläther durch, gewann man 16 g Polykondensat. Aus Chloroform erhielt man eine sehr spröde gelbe, klare Gießfolie. Versuchte man, diese nach Verdampfen des Lösungsmittels vom Untergrund abzulösen, zerfiel sie in einzelne Teile. Mit Verzweiger wird eine reduzierte Viskosität ηspez/c von 0,5 $cm^3/g$, ohne Verzweiger von 0,3 $cm^3/g$ (in Chloroform) bestimmt.

**Beispiel 2**

Die Umsetzung von 0,05 mol 4,4'-Dihydroxydiphenyläther erfolgte unter den Bedingungen wie in Beispiel 1 beschrieben. Anstelle des 4,4'-Dichlortriphenylphosphinoxids wurde ein 4,4'-Difluortriphenylphosphinoxid eingesetzt, das 10 Mol % 4-Fluortriphenylphosphinoxid enthielt. Als mehrfunktionelles Reagenz wurde 4,4',4"-Trifluortriphenylphosphinoxid (10 Mol-%, bezogen auf die Gesamtmenge an Di- und Monofluortriphenylphosphinoxid) verwendet. Die Reaktion wurde bereits nach 3,5 Stunden abgebrochen. Nach der Aufarbeitung erhielt man 16,5 g löslichen Polyäther. Dieser ergab aus Chloroform eine klare, gelbliche, flexible Gießfolie. Mit Verzweiger wurde eine reduzierte Viskosität ηspez/c von 0,6 $cm^3/g$ (in Chloroform) bestimmt.

**Beispiel 3**

Die Umsetzung von 0,05 mol 4,4'-Dihydroxydiphenyläther erfolgte wie in Beispiel 1 beschrieben, mit der Ausnahme, daß anstelle von 4,4'-Dichlortriphenylphosphinoxid 4,4'-Difluortriphenylphosphinoxid eingesetzt wurde. 3 Mol-% dieses Difluortriphenylphosphinoxids wurden durch 4,4',4"-Trifluortriphenylphosphinoxid ersetzt.

Die Umsetzung der Reaktionspartner bei 180°C wurde 5 Stunden nach Beendigung der Wasser-/Chlorbenzol-Auskreisung abgebrochen und die Mischung wie in Beispiel 1 beschrieben aufgearbeitet. Man gewann 17,3 g an gewünschtem Polykondensat. Das Produkt ergab aus Chloroform eine klare, gelbliche Gießfolie, die flexibel und zäh war.

In einem Vergleichsversuch wurde die beschriebene Umsetzung wiederholt, wobei nur die äquivalente Menge 4,4'-Difluortriphenylphosphinoxid verwendet wurde. Man gewann nur ein Polykondensat, das spröde Gießfolien aus Chloroform lieferte.

Weitere Beispiele wurden analog Beispiel 1 durchgeführt. Ausgangsverbindungen, Veränderungen der Bedingungen und die Ergebnisse sind in der folgenden Tabelle 1 zusammengefaßt:

**Tabelle I**

| Beispiele Nr. | Ausgangsverbindungen A' | B' | Verzweiger | ηspec/c (Chloroform) [$cm^3/g$] |
|---|---|---|---|---|
| 4 | 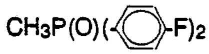 | 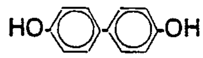 | 1,3,5-Hexantriol (2 Mol-%) | 0,7 |
| Vergleich | 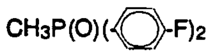 | 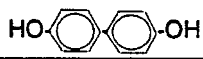 | — | 0,5 |
| 5 | 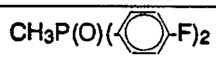 | 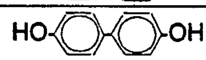 | Verzweiger (3) (2 Mol-%) | 0,8 |
| Vergleich | 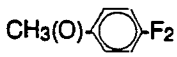 | 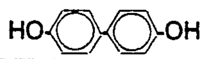 | — | 0,6 |
| 6 | 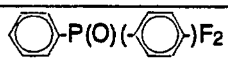 | Bisphenol (4) | Verzweiger (4) (2 Mol-%) | 0,7 |
| Vergleich | 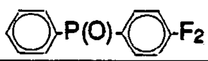 | Bisphenol (4) | — | 0,6 |
| 7 | 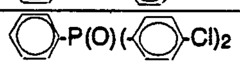 (ca. 3 % Metaisomer) | 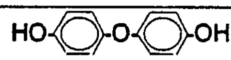 | Sovermol 650 NS®1) (Gewichtsverhältnis Bisphenol: Sovermol® = 9,91 : 0,53) | 0,5 |
| Vergleich | 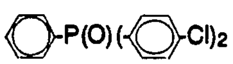 (ca. 3 % Metaisomer) | 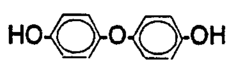 | — | 0,3 |
| 8 | 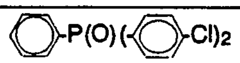 (ca. 3 % Metaisomer) | 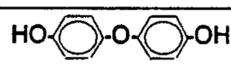 | VP-LA 977[2)] (Gewichtsverhältnis Bisphenol: VP-LA 977=9,91 : 1) | 0,5 |

[1)] Aliphatischer Alkohol mit 3 OH-Gruppen, Molekulargewicht ca. 600, technische Qualität; Produkt der Fa. Henkel KG, Düsseldorf

[2)] Aliphatischer Alkohol mit 3 OH-Gruppen, Molekulargewicht ca. 800, technische Qualität; Produkt der Fa. Henkel KG, Düsseldorf

Zusätzliche Beispiele zur Erläuterung der gemeinsamen Anwendung von mono- und mehrfunktionellen Verbindungen werden im folgenden angegeben. Ihre Herstellung kann gemäß Beispiel 1 vorgenommen werden. Ausgangsverbindungen, Veränderungen der Bedingungen und die Ergebnisse sind in der folgenden Tabelle II zusammengefaßt.

**Tabelle II**

| Beispiel Nr. | A' | B' | Monofunktionelle Verbindung 3 Mol-% | Verzweiger 3 Mol-% | Reaktionsdauer dauer h | ηspez/c (Chloroform) cm/g |
|---|---|---|---|---|---|---|
| 9 | 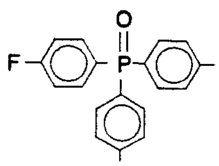 | 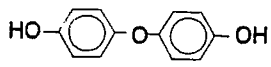 | 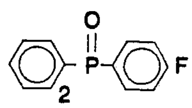 | 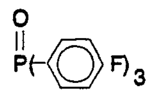 | 20 | 0,6 |
| Vergleich | " | " | " | – | 20 | 0,1 |

**Patentansprüche**

1. Phosphorhaltige Polyarylenäther mit wiederkehrenden Einheiten der Struktur A und gegebenenfalls B

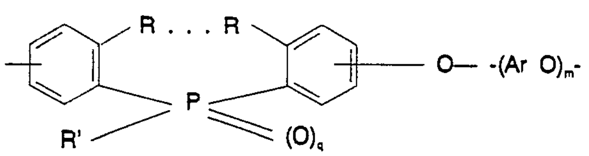

A B

worin

R jeweils ein Wasserstoffatom oder R...R zusammengenommen eine der unter R" genannten Gruppen,
R' eine Alkyl-, Chlormethyl-, Aryl-Gruppe
Ar eine Phenylen- oder Naphthylengruppe oder eine Gruppe

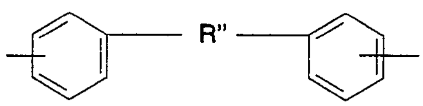

R" eine kovalente Einfachbindung, ein Sauerstoffatom, ein Schwefelatom, eine Sulfonyl-, Carbonyl-, Methylen- oder Isopropyliden-Brückengruppe oder einen 5 bis 15 C-Atome enthaltenden organischen Rest, dessen freie Valenzen von quartären C-Atomen ausgehen, oder die oben genannte Formel Phenolphthalein darstellt,
q = 0 oder 1
m einen Mittelwert im Bereich von 1 bis 10 bedeuten,

dadurch gekennzeichnet,
daß der phosphorhaltige Polyarylenäther verzweigt ist und als Verzweigungsstellen mit den Einheiten A und gegebenenfalls B statistisch wechselnde Einheiten der Strukturen C und/oder D in Mengen von 0,2 bis 20 Mol.-%, bezogen auf die Molsumme der Einheiten A, B, C, und D

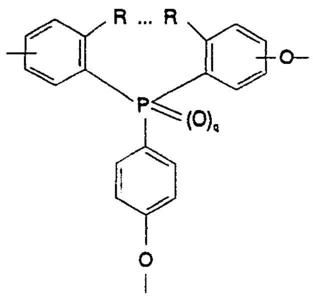

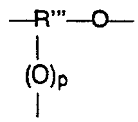

C D

enthält, wobei R und q die oben angegebenen Bedeutungen haben, R''' ein wenigstens dreiwertiger aliphatischer oder aromatischer Rest und p eine ganze Zahl von 1 bis 4 ist.

2. Phosphorhaltige Polyarylenäther gemäß Anspruch 1, gekennzeichnet durch eine reduzierte Viskosität $\eta_{sp}/c \geq 0{,}25$ dl/g.

3. Phosphorhaltige Polyarylenäther gemäß den Ansprüchen 1 oder 2, dadurch gekennzeichnet, das die Einheiten A und B zusammengenommen 90 bis 99,5 Mol-% und die Einheiten C und D zusammengenommen 10 bis 0,5 Mol-%, bezogen auf die Molsumme der Einheiten A, B, C und D, bilden.

4. Phosphorhaltige Polyarylenäther gemäß den Ansprüchen 1 bis 3, gekennzeichnet durch H, HO, Alkoxy-, Alkyl-, Halogen-, Aryl- bzw. Aryloxy-, oder Acyl- bzw. Acyloxygruppen als Endgruppen an den Enden der Haupt- und Seitenketten.

5. Phosphorhaltige Polyarylenäther gemäß den Ansprüchen 1 bis 4, dadurch gekennzeichnet, daß R = H und q = 1 ist.

6. Phosphorhaltige Polyarylenäther gemäß den Ansprüchen 1 bis 5, dadurch gekennzeichnet, daß Ar = Phenylen ist und m einen Wert von 1 bis 10 hat oder daß Ar eine Gruppe

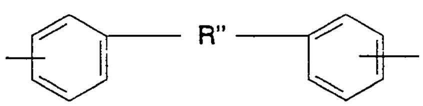

darstellt, und m = 1 und R'' eine Einfachbindung oder eine Isopropylidengruppe ist.

7. Verfahren zur Herstellung phosphorhaltiger Polyarylenäther nach den Ansprüchen 1 bis 6, durch Polykondensation eines bifunktionellen Phosphins bzw. Phosphinoxids A', gegebenenfalls zusammen mit einer bifunktionellen aromatischen Verbindung B' in Gegenwart einer zu den Gruppen X mindestens halb äquivalenten Menge Alkali bei einer Reaktionstemperatur von 100 – 300 Grad C

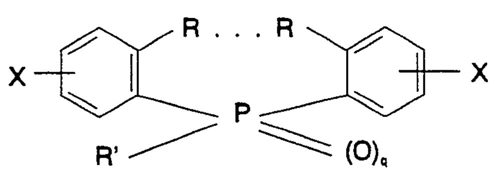

$X\text{-}(Ar\text{-}O)_{m\text{-}1}\text{ -}Ar\text{-}X$

A' B'

wobei R, R', Ar, q und m die in Anspruch 1 angegebene Bedeutung haben und die Gruppen X zur Hälfte aus Halogenatomen und zur anderen Hälfte aus Hydroxylgruppen bestehen, dadurch gekennzeichnet, daß die Polykondensation in Gegenwart von Verbindungen der Formeln C' und/oder D' und in einer Menge von 0,2 bis 20 Mol.-%, bezogen auf die Molsumme der Verbindungen A', B', C' und D'

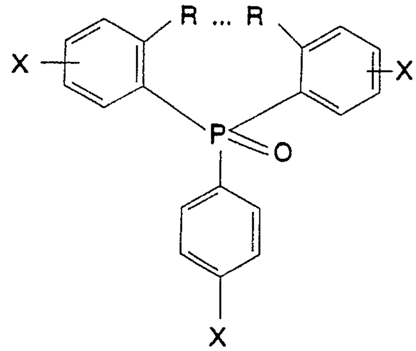 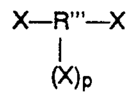

C' D' (p = 1 bis 4)

durchgeführt wird.

8. Verfahren nach Anspruch 7, dadurch gekennzeichnet, das die Verbindungen A' und B' zusammengenommen 90 bis 99,5 Mol-%, bezogen auf die Molsumme von A', B', C' und D' und gegebenenfalls zur Bildung von Endgruppen eingesetzter monofunktioneller Verbindungen mit einer Gruppe X ausmachen.

9. Verfahren nach den Ansprüchen 7 oder 8, dadurch gekennzeichnet, daß Verbindungen A', B', C', D' eingesetzt werden, worin X zur Hälfte aus Fluor- und/oder Chloratomen besteht.

10. Verfahren nach den Ansprüchen 1 bis 9, dadurch gekennzeichnet, daß die Polykondensation in Abwesenheit monofunktioneller Verbindungen und in Gegenwart von höchstens 5 Mol-% Verbindungen C' oder D' durchgeführt wird.

**Claims**

1. Phosphorus-containing polyarylene ethers with recurring units of structure A and optionally B

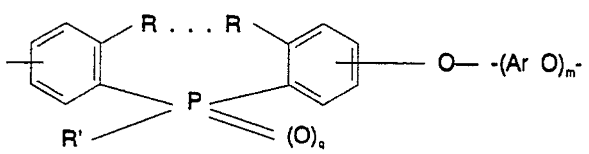

A B

wherein

R represents a hydrogen atom or R...R taken together represent one of the groups mentioned under R",
R' represents an alkyl, chloromethyl or aryl group
Ar represents a phenylene or naphthylene group or a group

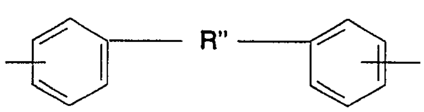

R" represents a covalent single bond, an oxygen atom, a sulphur atom, a sulphonyl, carbonyl, methylene or isopropylidene bridging group or a $C_{5-15}$ organic group the free valences of which start from quaternary carbon atoms, or the above-mentioned formula represents phenolphthalein,
q = 0 or 1

m represents an average value in the range from 1 to 10, characterised in that the phosphorus-containing polyarylene ether is branched and contains, as branching sites, units of structure C and/or D, which statistically fluctuate with units A and optionally B, in amounts of 0.2 to 20 mol-%, based on the molar sum of the units A, B, C and D

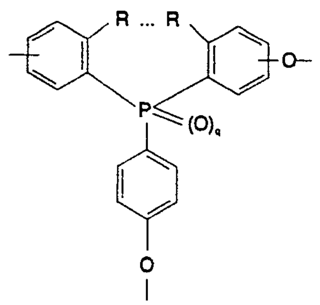

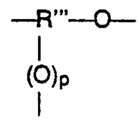

C D

wherein R and q are defined as hereinbefore, R''' represents an at least trivalent aliphatic or aromatic group and p is an integer from 1 to 4.

2. Phosphorus-containing polyarylene ethers according to claim 1, characterised by a reduced viscosity $\eta_{sp}/c \geq 0.25$ dl/g.

3. Phosphorus-containing polyarylene ethers according to claim 1 or 2, characterised in that the units A and B together form 90 to 99.5 mol-% and the units C and D together form 10 to 0.5 mol-%, based on the molar sum of the units A, B, C and D.

4. Phosphorus-containing polyarylene ethers according to claims 1 to 3, characterised by H, HO, alkoxy, alkyl, halogen, aryl or aryloxy, or acyl or acyloxy groups as the terminal groups at the ends of the main and side chains.

5. Phosphorus-containing polyarylene ethers according to claims 1 to 4, characterised in that R = H and q = 1.

6. Phosphorus-containing polyarylene ethers according to claims 1 to 5, characterised in that Ar = phenylene and m has a value from 1 to 10 or Ar represents a group

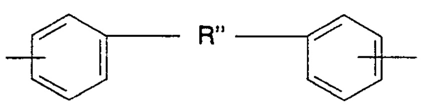

and m = 1 and R" is a single bond or an isopropylidene group.

7. Process for preparing phosphorus-containing polyarylene ethers according to claims 1 to 6, by polycondensation of a bifunctional phosphine or phosphine oxide A', optionally together with a bifunctional aromatic compound B' in the presence of a quantity of alkali which is at least half equivalent to the groups X, at a reaction temperature of 100 to 300°C

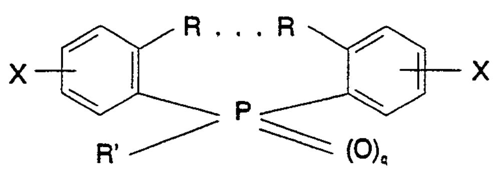

$X\text{-}(Ar\text{-}O)_{m-1}\text{-}Ar\text{-}X$

A' B'

wherein R, R', Ar, q and m are defined as in claim 1 and the groups X consist half of halogen atoms and half of hydroxyl groups, characterised in that the polycondensation is carried out in the presence of compounds of formulae C' and/or D' and in an amount of from 0.2 to 20 mol-%, based on the molar sum of the compounds A', B', C' and D'

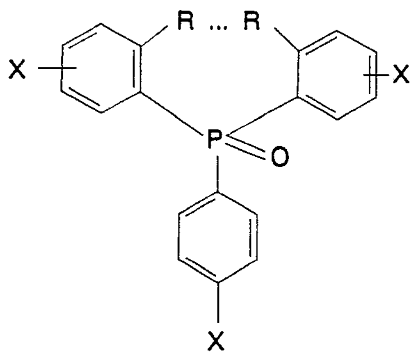

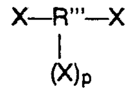

C'

D' (p = 1 to 4).

8. Process according to claim 7, characterised *in* that the compounds A' and B' together make up 90 to 99.5 mol-%, based on the molar sum of A', B', C' and D' and any monofunctional compounds having a group X which are used to form terminal groups.

9. Process according to claim 7 or 8, characterised in that compounds A', B', C' and D' are used wherein X consists half of fluorine and/or chlorine atoms.

10. Process according to claims 1 to 9, characterised in that the polycondensation is carried out in the absence of monofunctional compounds and in the presence of at most 5 mol-% of compounds C' or D'.

**Revendications**

1. Polyarylène-éther phosphoré comportant des unités répétitives de structures A et éventuellement B

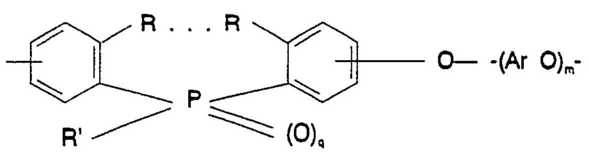

A B

dans lesquelles

R est mis chaque fois pour un atome d'hydrogène ou R...R pris ensemble représentent l'un des groupements cités à propos de R'',
R' est un groupement alkyle, chlorométhyle ou aryle,
Ar est un groupement phénylène ou naphtylène ou un groupement

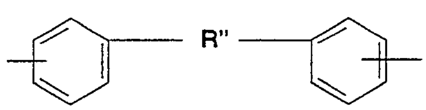

R'' étant une liaison simple covalente, un atome d'oxygène, un atome de soufre, un groupement de pontage sulfonyle, carbonyle, méthylène ou isopropylidène ou un reste organique contenant de 5 à 15 atomes de carbone dont les valences libres proviennent d'atomes de carbone quaternaires, ou la formule donnée ci-dessus représente la phénolphtaléine,
q = 0 ou 1,
m représente une valeur moyenne dans la gamme de 1 à 10, caractérisé en ce que le polyarylène-éther phosphoré est ramifié et contient, en tant que points de ramification avec les unités A et éventuellement B, des unités alternant statistiquement de structures C et/ou D dans des proportions de 0,2 à 20 % en moles par rapport à la somme molaire des unités A, B, C et D

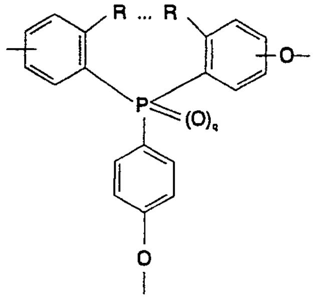

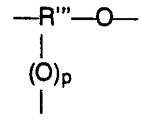

C D

R et q ayant les significations données précédemment, R''' étant un reste aliphatique ou aromatique au moins trivalent et p étant un nombre entier de 1 à 4.

2. Polyarylène-éther phosphoré selon la revendication 1, caractérisé par une viscosité réduite $\eta_{sp}/c$ à 0,25 dl/g.

3. Polyarylène-éther phosphoré selon la revendication 1 ou 2, caractérisé en ce que les unités A et B prises ensemble constituent de 90 à 99,5 % en moles et les unités C et D prises ensemble constituent de 10 à 0,5 % en moles par rapport à la somme molaire des unités A, B, C et D.

4. Polyarylène-éther phosphoré selon l'une quelconque des revendications 1 à 3, caractérisé par des atomes ou des groupements H, HO, alkyloxy, alkyle, halogène, aryle, aryloxy, acyle ou acyloxy en tant que groupements terminaux aux extrémités des chaînes principale et latérales.

5. Polyarylène-éther phosphore selon l'une quelconque des revendications 1 à 4, caractérisé en ce que R = H et q = 1.

6. Polyarylène-éther phosphoré selon l'une quelconque des revendications 1 à 5, caractérisé en ce que Ar = phénylène et m a une valeur de 1 à 10 ou en ce que Ar représente un groupement

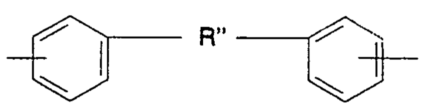

et m = 1, R" étant une liaison simple ou un groupement isopropylidène.

7. Procédé de préparation de polyarylène-éthers phosphorés selon l'une quelconque des revendications 1 à 6 par polycondensation d'un phosphine ou oxyde de phosphine bifonctionnel A', le cas échéant conjointement à un composé aromatique bifonctionnel B', en présence d'une quantité au moins demi-équivalente, par rapport aux groupements X, d'une substance alcaline, à une température de réaction de 100 à 300°C

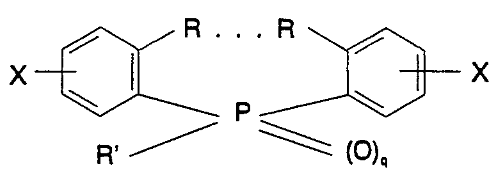

$X\text{-}(Ar\text{-}O)_{m\text{-}1}\text{-}Ar\text{-}X$

A' B'

R, R', Ar, q et m ayant les significations données dans la revendication 1 et les groupements X se composant pour la moitié d'atomes d'halogènes et pour l'autre moitié de groupements hydroxyle, caractérise en ce que la polycondensation est conduite en présence de composés de formules C' et/ou D', dans une proportion de 0,2 à 20 % en moles par rapport à la somme molaire des composés A', B', C' et D'

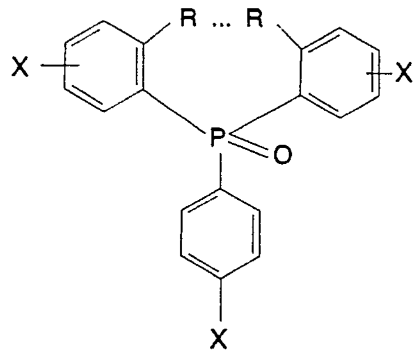

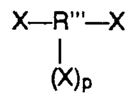

C'

D' (p=1 à 4)

8. Procédé selon la revendication 7, caractérisé en ce que les composés A' et B' pris ensemble constituent de 90 à 99,5 % en moles par rapport à la somme molaire de A', B', C' et D' et de composés monofonctionnels comportant un groupement X, éventuellement utilisés pour la formation de groupements terminaux.

9. Procédé salon la revendication 7 ou 8, caractérisé en ce qu'on utilise des composés A', B', C', D' dans lesquels X est constitué pour la moitié par des atomes de fluor et/ou de chlore.

10. Procédé selon l'une quelconque des revendications 7 à 9, caractérisé en ce que la polycondensation est conduite en l'absence de composés monofonctionnels et en présence de 5 % en moles au maximum de composés C' ou D'.